# EUROPÄISCHE PATENTSCHRIFT

(11) **EP 2 100 097 B1**
(45) Veröffentlichungstag und Bekanntmachung des Hinweises auf die Patenterteilung: **26.08.2015**
(21) Anmeldenummer: 07821196.8
(22) Anmeldetag: 11.10.2007
(51) Int. Cl.: G01C 21/32

(54) **NAVIGATIONSEINRICHTUNG**
NAVIGATION DEVICE
DISPOSITIF DE NAVIGATION

(30) Priorität: 05.12.2006 DE 102006057286
(43) Veröffentlichungstag der Anmeldung: 16.09.2009
(73) Patentinhaber: Robert Bosch GmbH, 70442 Stuttgart (DE)
(72) Erfinder: WALKLING, Uwe, 31035 Barfelde (DE); FIEDLER, Marco, 31199 Diekholzen (DE); BRANDES, Henry, 31556 Woelpinghausen (DE); LISTLE, Holger, 31141 Hildesheim (DE); OSMERS, Ralf, 31139 Hildesheim (DE); KLEIN, Thomas, 31061 Alfeld (DE); KREWER, Joerg, 30982 Pattensen (DE); LUEER, Stefan, 31139 Hildesheim (DE)
(86) Internationale Anmeldenummer: PCT/EP2007/060829
(87) Internationale Veröffentlichungsnummer: WO 2008/068087

(56) Entgegenhaltungen:
- EP-A- 0 838 663
- DE-A1- 10 012 441

## Beschreibung

Die Erfindung betrifft eine Navigationseinrichtung, insbesondere für Landfahrzeuge nach dem Oberbegriff von Anspruch 1. Weiterhin betrifft die Erfindung ein Verfahren zum Festlegen eines Ziels in einer Navigationseinrichtung nach dem Oberbegriff von Anspruch 6.

Navigationseinrichtungen für Fahrzeuge, insbesondere für Kraftfahrzeuge, sowie Verfahren zum Betreiben solcher Navigationseinrichtungen sind bereits bekannt. Sie dienen dazu, die aktuelle geographische Position eines Fahrzeuges zu bestimmen und in Abhängigkeit eines vorgebbaren, zu erreichenden Zieles die jeweils günstigste Fahrtroute zu berechnen und den Fahrer durch optische und akustische Hinweise entsprechend zu führen.

Die bekannten Navigationseinrichtungen benötigen Informationen, die für die Bestimmung des aktuellen Standortes des Fahrzeugs und die Berechnung der Fahrtroute notwendig sind. Insbesondere gehören hierzu Straßenverläufe, Abbiegebedingungen, festgelegte Fahrtrichtungen und dergleichen. Diese Informationen werden in einer Datenbasis zur Verfügung gestellt. Diese umfasst beispielsweise eine so genannte digitale Straßenkarte, die Weg- und/oder Entscheidungspunkte der möglichen Routen enthält. Üblicherweise werden die Daten der Datenbasis auf Massenspeichern, insbesondere auf einer CD-ROM oder auf einer DVD in der Navigationseinrichtung bereitgestellt.

Zur geographischen Positionsbestimmung des Fahrzeugs ist ein Ortungssystem erforderlich. Üblicherweise wird hierzu das Satelliten gestützte Global Positioning System (GPS) eingesetzt.

Mit diesen Komponenten kann eine Einrichtung zur elektronischen Datenverarbeitung die vom Ortungssystem gelieferten Positionsdaten mit den in der digitalen Straßenkarte gespeicherten Daten bestimmen und daraus die aktuelle Position des Fahrzeugs ermittelen . Entsprechend einem ausgewählten Zielpunkt kann nunmehr durch die Einrichtung zur elektronischen Datenverarbeitung anhand von Wegepunkten und/oder Entscheidungspunkten auf einer ausgewählten günstigen Fahrtroute dem Fahrer visuell und/oder akustisch eine Zielführungsinformation gegeben werden.

Zur Eingabe des gewünschten Zieles in die Navigationseinrichtung wird, wie beispielsweise aus der DE 100 12 441 A1 bekannt ist, die Zieladresse mit ihren Komponenten Ort, Straße, Hausnummer Buchstabe für Buchstabe durch Blättern innerhalb des Alphabets und durch Bestätigen des ausgewählten Buchstabens mit Hilfe eigens dafür vorgesehener Tasten eingegeben. Zu jedem der eingegebenen Buchstaben oder jeder Folge von eingegebenen Buchstaben wird eine Zielnamensliste erzeugt, aus denen der Benutzer nach hinreichender Eingabe die gewünschte Komponente, etwa die Stadt, die Straße, die Hausnummer oder ähnliches auswählen kann.

Gegenwärtig häufig verwendete Navigationseinrichtungen weisen oft Daten auf, die in unterschiedlichen Datenbanken vorgesehen sind. Zum einen sind so genannte geografische Daten hinterlegt, die in geografischen Teilgebieten abgelegt werden. Diese werden üblicher Weise für Umgebungsanfragen genutzt und hierzu alphabetisch oder nach Entfernungen sortiert verwendet. Andererseits sind in einer anderen Datenbank so genannte hierarchische Daten hinterlegt, die für hierarchische Abfragen verwendet werden. Hierzu zählen Hierarchien wie Land, Stadt, Straße, Postleitzahl oder Hausnummer. Die beiden Datenbanken sind getrennt und damit vom Informationsgehalt redundant in der Navigationseinrichtung vorhanden.

Aufgabe der vorliegenden Erfindung ist es daher, eine Navigationseinrichtung und ein Verfahren zum Festlegen eines Ziels oder eines interessierenden Punktes in einer Navigationseinrichtung vorzuschlagen, mit dem das erforderliche Datenvolumen reduziert wird.

Diese Aufgabe wird durch eine Navigationseinrichtung mit den Merkmalen nach Anspruch 1 gelöst. Im Hinblick auf das Verfahren besteht die Lösung in einem Verfahren zum Festlegen eines Ziels oder interessierenden Punktes in einer Navigationseinrichtung mit den Merkmalen gemäß Anspruch 6.

Erfindungsgemäß wird also eine Navigationseinrichtung vorgeschlagen, die insbesondere für Landfahrzeuge, wie Kraftfahrzeuge geeignet ist. Zur Zieleingabe oder Punkteingabe weist die Navigationseinrichtung eine hierarchische Datenbank auf, die für hierarchische Anfragen genutzt wird. Die hierarchische Datenbank weist einen Datenbaum mit hierarchisch angeordneten Daten auf. Weiterhin ist in der Navigationseinrichtung wenigstens eine geografische Datenbank vorgesehen, die Daten aufweist, die in geografischen Teilgebieten angeordnet sind. In der hierarchischen Datenbank ist wenigstens ein Verweis vorgesehen, der zu wenigstens einer geografischen Datenbank verweist.

Mit der Verknüpfung der Daten über Verweise in der Baumstruktur müssen nicht mehr alle Pfade vollständig in der hierarchischen Datenbank vorgehalten werden. Damit kann das vorgehaltene Datenvolumen reduziert werden, ohne dass ein Informationsverlust eintreten würde.

In einer bevorzugten Ausführungsform der Erfindung weist die hierarchische Datenbank die Hierarchien Land, Stadt und Straße auf und der Verweis ist hierarchisch unterhalb der Hierarchie Land vorgesehen. Hierbei kann der Verweis beispielsweise an der Stelle des Hierarchiepunktes Stadt oder Straße vorgesehen werden.

Weiterhin kann in der Datenstruktur der hierarchischen Datenbank der Verweis zusätzlich zu den Hierarchiepunkten der hierarchischen Datenbank vorgesehen werden.

Ebenso kann eine Vielzahl von Verweisen zu wenigstens einer geografischen Datenbank vorgesehen sein.

Zum Festlegen eines Zieles oder eines interessierenden Punktes in einer Navigationseinrichtung mit einer hierarchische Datenbank mit einem Datenbaum mit hierarchisch angeordneten Daten und wenigstens eine geografischen Datenbank mit Daten, die in geografischen Teilgebieten angeordnet sind, wird dann eine bestimmte Hierarchiestufe der hierarchischen Datenbank mit einer geografischen Datenbank insbesondere mit einem Verweis verknüpft.

Bei der Durchführung des Verfahrens kann die Verknüpfung davon abhängig gemacht werden, welches Datenvolumen zu verarbeiten ist, und/oder wie hoch die Anzahl der zu betrachtenden geografischen Gebiete ist.

Vorteilhaft ist nun insbesondere, dass die Daten-Pfade in der hierarchischen Datenbank nur noch in so weit vorgehalten werden müssen, wie es aufgrund der äußeren Rahmenbedingungen wie etwa der erforderlichen Systemperformance oder des Speicherbedarfs erforderlich ist. Damit wird das Datenvolumen für nicht benötigte Pfade im Baum reduziert, ohne dass Informationen verloren gingen. Die weitere Verarbeitung erfolgt dann auf Basis der in den geografischen Teilgebieten vorhandenen Daten.

Weitere Vorteile und vorteilhafte Ausführungsformen der Erfindung sind Gegenstand der nachfolgenden Figuren sowie deren zugehörige Beschreibungsteile.

Es zeigen im Einzelnen:
- Fig. 1:: schematisch ein erfindungsgemäßes Blockschaltbild einer Navigationseinrichtung mit einer hierarchischen und einer geografischen Datenbank
- Fig. 2:: schematisch eine Verknüpfung zwischen der hierarchischen und der geografischen Datenbank
- Fig. 3:: schematisch das durchzuführende Verfahren zum Festlegen eines Ziels in einer erfindungsgemäßen Navigationseinrichtung
- Fig. 4:: schematisch eine Verknüpfung zwischen einer weiteren hierarchischen Datenbank und der geographischen Datenbank

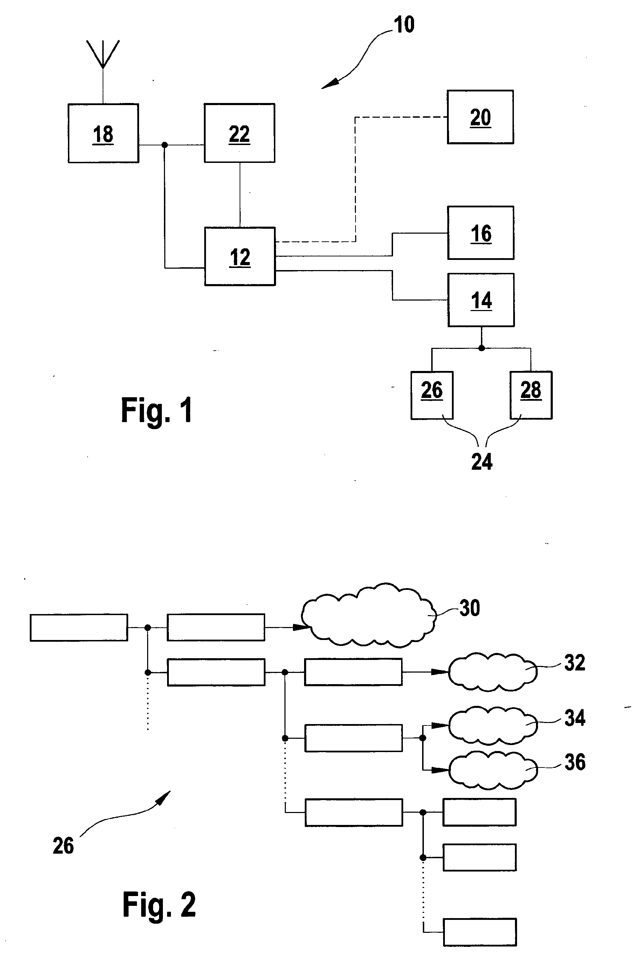

Fig. 1 zeigt schematisch ein Blockschaltbild einer Navigationseinrichtung 10. Diese weist zur Zielführung, insbesondere zur Führung eines Fahrers eines Landfahrzeuges entlang einer Fahrtroute einen Routenrechner 12 auf. Auf seiner Eingangseite ist der Routenrechner 12 mit einer Zieleingabeeinheit 14, einem Straßenkartenspeicher 16, einem Positionserkennungsmodul 18, wie etwa einem GPS-Modul verbunden. Optional kann auch eine Verbindung zwischen dem Routenrechner 12 mit einem Verkehrsinformationssystem 20 vorgesehen sein. Der Routenrechner 12 kann damit auf der Basis der mit Hilfe der Zieleingabeeinrichtung 14 eingegebenen Zielposition und der von dem Positionserkennungsmodul 18 übertragenen aktuellen Ausgangsposition die schnellste oder kürzeste Route berechnen, die dann an eine mit dem Routenrechner 12 verbundenen Zielführungseinheit 22 übertragen wird. Die Zielführungseinheit gibt dann optisch und/oder akustisch Führungshinweise an den Benutzer, wobei auch die von dem Verkehrsinformationssystem 20 gelieferten aktuellen Verkehrsdaten berücksichtigt werden können.

Die Zieleingabeeinheit 14 ist mit Zieledatenbanken 24 verbunden, in denen die Informationen zu den möglichen Zielen abgelegt sind. Die Zieledatenbanken 24 sind dabei als wenigstens in eine hierarchische Datenbank 26 und eine geografische Datenbank 28 ausgeführt. In der geografischen Datenbank 28 sind Zieldaten in geografischen Teilgebieten abgelegt. Diese werden vorwiegend für Umgebungsanfragen alphabetisch sortiert oder sortiert nach Entfernungen genutzt. In der hierarchischen Datenbank 26 sind die Zieldaten hierarchisch, z. B. in den Hierarchien Land, Stadt, Straße, Hausnummer abgelegt. Dabei sind in der hierarchischen Datenbank 26 Verweise zu der geografischen Datenbank abgelegt, was im Zusammenhang mit Fig. 2 noch näher beschrieben ist.

Fig. 2 zeigt schematisch und beispielhaft mögliche Verknüpfungen zwischen der hierarchischen und der geografischen Datenbank. Die hierarchische Datenbank 26 ist am vorliegenden Beispiel in die Hierarchien Land, Stadt, Straße und Hausnummern unterteilt. Als allgemeine Beispiele sind die Städte A-Stadt, B-Stadt bis Z-Stadt angegeben. Die Verweise 30 auf die entsprechenden Gebiete in der geografischen Datenbank 28 können an sich in jeder Hierarchieebene der hierarchischen Datenbank vorgesehen werden. Als Beispiel ist in Fig. 2 bereits nach der Hierarchie A-Stadt ein Verweis 30 auf die geografische Datenbank 28 eingetragen. Mit diesem Verweis werden die untergeordneten Daten demgemäß der geografischen Datenbank 28 entnommen.

Als weitere Beispiele sind in Fig. 2 in der hierarchischen Datenbank 26 die Verweise 32, 34 und 36 angegeben, die jeweils nach der Hierarchie Straße, im Beispiel wie angegeben nach A-Straße und B-Straße, auf die entsprechenden Daten der geografischen Datenbank 28 verweisen. Dabei können je Hierarchie, wie am Beispiel von B-Stadt angegeben, auch mehrere Verweise 34, 36 vorgesehen sein.

Ein Entscheidungskriterium, an welcher Stelle ein Pfad in der hierarchischen Datenbank 26 abgeschnitten und durch einen Verweis auf die geografische Datenbank 28 ersetzt wird, kann beispielsweise darin bestehen, wie groß die Anzahl der zu betrachtenden geografischen Gebiete in der jeweiligen Hierarchie ist. Als ein weiteres Entscheidungskriterium kann das jeweils zu betrachtende Datenvolumen herangezogen werden.

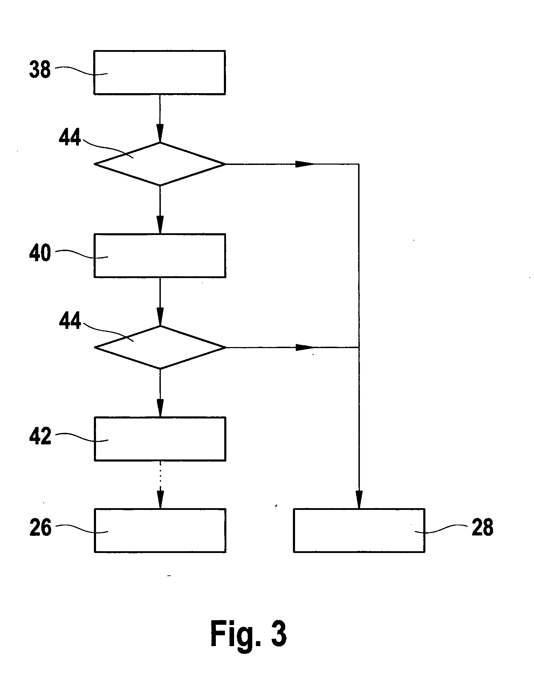

Das durchzuführende Verfahren zum Festlegen eines Ziels oder eines interessanten Punktes in einer erfindungsgemäßen Navigationseinrichtung 10, die eine hierarchische Datenbank 26 mit einem Datenbaum mit hierarchisch angeordneten Daten und eine geografischen Datenbank 28 mit Daten, die in geografischen Teilgebieten angeordnet sind, aufweist ist schematisch in Fig. 3 dargestellt. Zur Festlegung des Ziels wird im ersten Hierarchieschritt 38 zunächst die erste Hierarchie des Zieles, etwa das Land, festgelegt. Im darauf folgenden Entscheidungsschritt 44 wird geprüft, ob nach diesem Hierarchieschritt für die konkret ausgewählte Hierarchie, etwa für das ausgewählte Land eine Verweis zu einer geografischen Datenbank 28 vorliegt. Ist dies der Fall, so werden die noch fehlenden Daten aus der geografischen Datenbank 28 gewonnen. Ist dies nicht der Fall, so wird in der hierarchischen Datenbank 26 der nächste Hierarchieschritt 40 abgearbeitet. Dabei kann beispielsweise eine Stadt ausgewählt werden. Daran anschließend erfolgt wieder im Entscheidungsschritt 44 eine Prüfung daraufhin, ob ein Verweis für die konkret ausgewählte Hierarchie, also die konkrete Stadt, ein Verweis in die geografische Datenbank 28 vorliegt. Ist dies nun der Fall, so werden die noch fehlenden Daten aus der geografischen Datenbank 28 gewonnen. Ist dies nicht der Fall, so wird wiederum in der hierarchischen Datenbank 26 der nächste Hierarchieschritt 42 abgearbeitet. Diese Vorgehensweise wird nun so lange wiederholt, bis entweder ein Verweis gefunden wird oder alle Informationen für das Ziel aus der hierarchischen Datenbank 26 für das konkret ausgewählte Ziel entnommen werden.

Der Aufbau und die Ausprägung der geografischen Gebiete in der geografischen Datenbank ist an sich beliebig. Allerdings müssen die in der hierarchischen Datenbank 26 nicht vorhandenen Daten über den Verweis aus der geografischen Datenbank 28 entnehmbar sein.

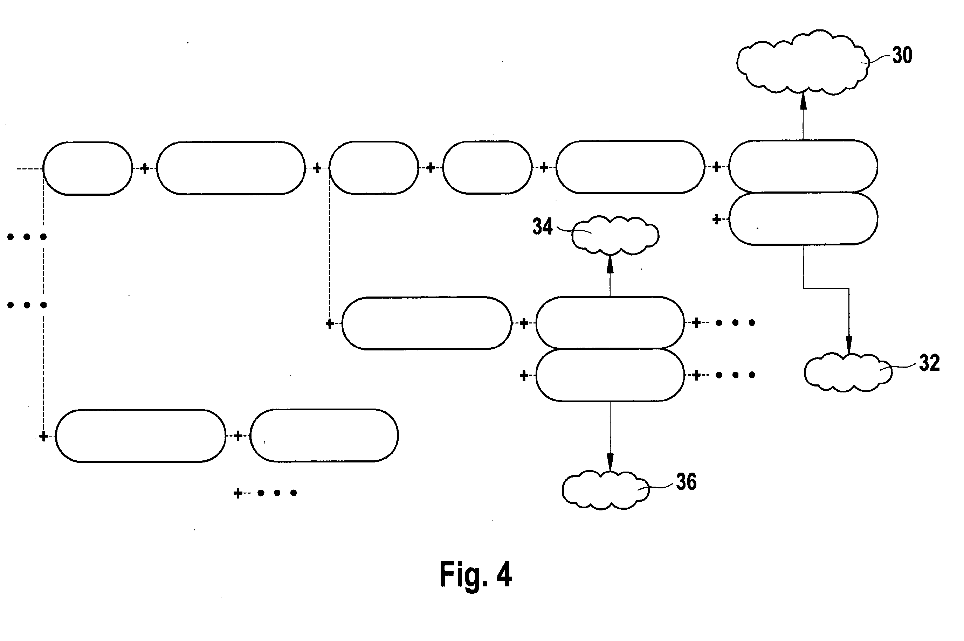

Figur 4 zeigt schematisch und beispielhaft eine mögliche Verknüpfung zwischen einer weiteren hierarchischen Datenbank und der geographischen Datenbank. Die weitere hierarchische Datenbank 26 ist am Beispiel in die Hierarchien Land, Stadt und Sonderziele eingeteilt. Als Land ist in dem Ausgangsbeispiel Dutschland, als Stadt die A Stadt und als Sonderziele Restaurant und Parkplatz dargestellt. Die Sonderziele können jede Art von interessanten Platz (point of interest) darstellen. Von dem Sonderziel Restaurant kann ein Verweis 30 auf die geographische Datenbank 28 eingetragen sein. Von dem Sonderziel-Parkplatz kann ein weiterer Verweis 32 auf den entsprechenden Daten der geographischen Datenbank 28 verweisen.

Zudem kann die weitere Datenbank nach der Hierarchie Land überregionale Ziele wie z. B. Grenzübergang oder Flughafen aufweisen. Sowohl vom Grenzübergang als auch vom Flughafen kann ein Verweis 34, 36 auf den entsprechenden Daten der geographischen Datenbank 28 hinterlegt sein. Des weiteren kann die Hierarchie globale Punkte (points of interest) hinterlegt sein, die wiederum beispielsweise in Telefonnummern unterteilt sind. Die globalen Punkte stellen points of interest dar.

## Patentansprüche

1. Navigationseinrichtung (10) für Landfahrzeuge mit einer hierarchischen Datenbank (26) die einen Datenbaum mit hierarchisch angeordneten Daten aufweist und wenigstens einer geografischen Datenbank (28) die Daten aufweist, die in geografischen Teilgebieten angeordnet sind, **dadurch gekennzeichnet, dass** in der hierarchischen Datenbank (26) ein Verweis (30, 32, 36) zu wenigstens einer geografischen Datenbank (28) vorgesehen ist.

2. Navigationseinrichtung (10) nach Anspruch 1 **dadurch gekennzeichnet, dass** die hierarchische Datenbank (26) wenigstens nach Land, Stadt und Straße hierarchisch aufgebaut ist und der Verweis (30, 32, 36) hierarchisch unterhalb der Hierarchie Land vorgesehen ist.

3. Navigationseinrichtung (10) nach Anspruch 2 **dadurch gekennzeichnet, dass** der Verweis (30, 32, 36) an Stelle des Hierarchiepunktes Stadt oder Straße vorgesehen ist.

4. Navigationseinrichtung (10) nach einem der Ansprüche 1 bis 3 **dadurch gekennzeichnet, dass** der Verweis (30, 32, 36) zusätzlich zu den Hierarchiepunkten der hierarchischen Datenbank (26) vorgesehen ist.

5. Navigationseinrichtung (10) nach einem der Ansprüche 1 bis 4 **dadurch gekennzeichnet, dass** in der Datenstruktur der hierarchischen Datenbank (26) eine Vielzahl von Verweisen (30, 32, 36) zu wenigstens einer geografischen Datenbank (28) vorgesehen ist.

6. Verfahren zum Festlegen eines Ziels oder eines interessanten Ortes in einer Navigationseinrichtung (10), die eine hierarchische Datenbank (26) mit einem Datenbaum mit hierarchisch angeordneten Daten und wenigstens eine geografischen Datenbank (28) mit Daten, die in geografischen Teilgebieten angeordnet sind, aufweist **dadurch gekennzeichnet, dass** zur Festlegung des Zieles oder des interessanten Ortes Daten aus der hierarchischen Datenbank (26) mit Daten aus der geografischen Datenbank (28) verknüpft werden.

7. Verfahren nach Anspruch 6 **dadurch gekennzeichnet, dass** die Daten aus der hierarchischen Datenbank (26) über einen Verweis (30, 32, 36) in der hierarchischen Datenbank (26) mit der geografischen Datenbank (28) verknüpft werden.

8. Verfahren nach Anspruch 6 oder 7 **dadurch gekennzeichnet, dass** eine Verknüpfung der hierarchischen Datenbank (26) mit der geografischen Datenbank (28) unter Berücksichtigung der zu betrachtenden Gebiete und/oder des zu verarbeitenden Datenvolumens erfolgt.

## Claims

1. Navigation device (10) for land vehicles having a hierarchic database (26), which has a data tree having hierarchically arranged data, and at least one geographical database (28), which has data that are arranged in geographical subregions, **characterized in that** the hierarchic database (26) contains a reference (30, 32, 36) to at least one geographical database (28).

2. Navigation device (10) according to Claim 1, **characterized in that** the hierarchic database (26) has a hierarchic structure at least according to country, city and road and the reference (30, 32, 36) is provided hierarchically below the country hierarchy.

3. Navigation device (10) according to Claim 2, **characterized in that** the reference (30, 32, 36) is provided instead of the city or road hierarchy point.

4. Navigation device (10) according to one of Claims 1 to 3, **characterized in that** the reference (30, 32, 36) is provided in addition to the hierarchy points of the hierarchic database (26).

5. Navigation device (10) according to one of Claims 1 to 4, **characterized in that** the data structure of the hierarchic database (26) contains a multiplicity of references (30, 32, 36) to at least one geographical database (28).

6. Method for stipulating a destination or a place of interest in a navigation device (10) that has a hierarchic database (26), having a data tree having hierarchically arranged data, and at least one geographical database (28), having data that are arranged in geographical subregions, **characterized in that** the destination or the place of interest is stipulated by combining data from the hierarchic database (26) with data from the geographical database (28).

7. Method according to Claim 6, **characterized in that** the data from the hierarchic database (26) are combined with the geographical database (28) by means of a reference (30, 32, 36) in the hierarchic database (26).

8. Method according to Claim 6 or 7, **characterized in that** the hierarchic database (26) is combined with the geographical database (28) by taking account of the regions for consideration and/or the data volume for processing.

## Revendications

1. Dispositif de navigation (10) pour véhicules routiers avec une base de données hiérarchique (26) qui présente un arbre de données avec des données disposées hiérarchiquement et au moins une base de données géographique (28) qui présente des données, lesquelles sont disposées selon des régions géographiques partielles,
**caractérisé en ce que**,
dans la base de données hiérarchique (26), on prévoit un renvoi (30, 32, 36) à au moins une base de données géographique (28).

2. Dispositif de navigation (10) selon la revendication 1, **caractérisé en ce que** la base de données hiérarchique (26) est organisée hiérarchiquement au moins par pays, ville et rue, et **en ce que** le renvoi (30, 32, 36) est prévu hiérarchiquement au-dessous de la hiérarchie de pays.

3. Dispositif de navigation (10) selon la revendication 2, **caractérisé en ce que** le renvoi (30, 32, 36) est prévu à la place du noeud hiérarchique de ville ou de rue.

4. Dispositif de navigation (10) selon l'une des revendications 1 à 3, **caractérisé en ce que** le renvoi (30, 32, 36) est prévu en plus des noeuds hiérarchiques de la base de données hiérarchique (26).

5. Dispositif de navigation (10) selon l'une des revendications 1 à 4, **caractérisé en ce que**, dans la structure de données de la base de données hiérarchique (26), on prévoit une pluralité de renvois (30, 32, 36) à au moins une base de données géographique (28).

6. Procédé pour déterminer un objectif ou un lieu intéressant dans un dispositif de navigation (10) qui présente une base de données hiérarchique (26) avec un arbre de données avec des données disposées hiérarchiquement et au moins une base de données géographique (28) avec des données qui sont disposées selon des régions géographiques partielles,
**caractérisé en ce que**,
pour la détermination de l'objectif ou du lieu intéressant, des données issues de la base de données hiérarchique (26) sont mises en liaison avec des données issues de la base de données géographique (28).

7. Procédé selon la revendication 6, **caractérisé en ce que** les données issues de la base de données hiérarchique (26) sont mises en liaison, via un renvoi (30, 32, 36) dans la base de données hiérarchique (26), avec la base de données géographique (28).

8. Procédé selon la revendication 6 ou 7, **caractérisé en ce qu'**une liaison entre la base de données hiérarchique (26) et la base de données géographique (28) s'effectue en tenant compte des régions à considérer et/ou du volume de données à traiter.
